# EUROPÄISCHE PATENTSCHRIFT

(11) **EP 3 798 580 B1**
(45) Veröffentlichungstag und Bekanntmachung des Hinweises auf die Patenterteilung: **12.04.2023**
(21) Anmeldenummer: 20192557.5
(22) Anmeldetag: 25.08.2020
(51) Int. Cl.: G01D 5/347, G01D 5/24, G01B 21/02

(54) **VERFAHREN ZUR HERSTELLUNG EINES MESSKOPFGEHÄUSES, DECKEL UND MESSKOPFGEHÄUSE**
METHOD FOR MANUFACTURING A MEASURING HEAD HOUSING, COVER AND MEASURING HEAD HOUSING
PROCÉDÉ DE FABRICATION D'UN BOITIER DE TÊTE DE MESURE, COUVERCLE ET BOITIER DE TÊTE DE MESURE

(30) Priorität: 25.09.2019 DE 102019214643
(43) Veröffentlichungstag der Anmeldung: 31.03.2021
(73) Patentinhaber: Robert Bosch GmbH, 70442 Stuttgart (DE)
(72) Erfinder: Schuler, Stefan, 97453 Schonungen (DE)

(56) Entgegenhaltungen:
- EP-A1- 0 858 253
- DE-A1- 2 424 722
- DE-A1-102008 022 312
- US-B2- 8 033 859

## Beschreibung

Die vorliegende Offenbarung betrifft ein Verfahren zur Herstellung eines Messkopfgehäuses gemäß Anspruch 1 und einen Deckel für ein Messkopfgehäuse.

Aus der DE 10 2008 022 312 A1 ist eine Abtastvorrichtung mit einem Messkopfgehäuse bekannt, welche eine Führungsschiene U-förmig umgreift. In der Abtastbaugruppe ist ein gesonderter Sensor vorgesehen, der zum Abtasten einer Maßverkörperung vorgesehen ist, um die Stellung des Führungswagens gegenüber der Führungsschiene zu bestimmen. Auf Grund der Anordnung der Abtastvorrichtung in dem Messkopfgehäuse, handelt es sich bei diesem Aufbau grundsätzlich um ein sogenanntes Integriertes Messsystem (IMS).

Das Messkopfgehäuse ist dabei derart ausgebildet, dass bei jedem Messkopfgehäuse drei Deckel verwendet werden, nämlich zwei seitliche Deckel und ein oberer Deckel. Insbesondere bei kleinen Ausführungsformen eines IMS ist die Deckelgeometrie des oberen Deckels kompliziert, da im Messkopfgehäuse kein sogenannter Steg zwischen dem oberen und den seitlichen Deckeln ausgebildet ist. Demnach müssen der obere Deckel und der seitliche Deckel direkt ineinandergreifen. Auf Grund dieses Ineinandergreifens zwischen dem oberen und den seitlichen Deckeln ist eine gewisse Mindestdicke des oberen Deckels notwendig, da die Deckel händisch miteinander verklebt werden. Gleichzeitig muss der obere Deckel auf einer Innenwandung aus Platzgründen hohlgefräst werden. Das ist aufwendig und teuer. Darüber hinaus kann der Sensor zum Abdichten gegenüber Prozess- und Umwelteinflüssen mit einer Vergussmasse aus flüssigem Polyurethanharz vollständig umgossen. Anschließend werden die Deckel mit dem Messkopfgehäuse verschraubt.

Die DE 10 2008 022 312 A1 offenbart es darüber hinaus einen U-förmigen Deckel für ein Messkopfgehäuse vorzusehen. Dieser Deckel wird mit Befestigungsmitteln über Stirnplatten des Messkopfgehäuses mit diesem verbunden. Eine Auswerteelektronik und Sensoren in einem Inneren des Messkopfgehäuses werden mit einer Vergussmasse gegenüber äußeren Einflüssen nach der Montage des Deckels umspritzt, so dass ein fluiddichter Abschluss dieser Bauteile gewährleistet ist.

Nachteilig an den vorgenannten Lösungen ist es, dass der Aufbau eines Messkopfgehäuses sehr aufwendig ist und der Schutz der anfälligen Auswerteelektronik und der Sensoren durch ein abschließendes Umgießen, bzw. Vergießen des Inneren des Messkopfgehäuses erfolgt, so dass ein Austausch der Inneren Bauteile nahezu unmöglich wird.

Die DE2424722 offenbart ein weiteres Gehäuse für Messgeräte mit einem U-förmigen Deckel.

Demgegenüber besteht die Aufgabe der Erfindung darin, ein vereinfachtes Verfahren zur Herstellung eines Messkopfgehäuses eines integrierten Messsystems einer Profilschienenführung zu schaffen. Eine weitere Aufgabe der Erfindung ist es, einen einfach aufgebauten Deckel sowie ein damit ausgeführtes Messkopfgehäuse zu schaffen.

Diese Aufgabe wird im Hinblick auf das Verfahren durch die Merkmalskombination des Anspruchs 1 gelöst.

Das erfindungsgemäße Verfahren zur Herstellung eines Messkopfgehäuses, insbesondere für ein integriertes Messsystem einer Profilschienenführung, umfasst dabei mehrere Schritte. Zunächst wird ein weitestgehend planer Deckelrohling bereitgestellt. Das heißt, dass es sich bei dem bereitgestellten Deckelrohling im weitesten Sinne um ein Flachmaterial handelt. Nachdem der Deckelrohling positioniert wurde, wird ein Mittel zur stoffschlüssigen Verbindung, vorzugsweise ein Klebstoff, beispielsweise in Form einer Klebstoffraupe auf den Deckelrohling aufgetragen. Der Auftrag erfolgt auf einer Innenseite des Deckels, die einem Messkopfgrundkörper zugewandt ist. Nach Auftragen des Mittels wird der Messkopfgrundkörper auf den Deckelrohling aufgesetzt. Daraufhin werden sich an Endabschnitten des Deckelrohlings befindliche Schenkel derart umgebogen, dass das Mittel, das auf dem Deckelrohling aufgebracht ist, in Anlage mit dem Messkopfgrundkörper kommt. Aus dem Deckelrohling wird so ein u-förmiger Deckel geformt.Erfindungsgemäß ist der Klebstoff derart positioniert, dass es mit einer Stirnplatte und einem Hauptkörper eines Messkopfgrundkörpers in Anlage kommt. Das erfindungsgemäße Verfahren ermöglicht somit eine kostengünstige Herstellung eines Messkopfgehäuses, da ein einstückiger Deckelrohling, als Flachmaterial bereitgestellt, durch Umformen zu einem Deckel umgeformt wird und zusammen mit dem Messkopfgrundkörper ein beispielsweise gemäß der Schutzklasse IP67 prozesssicher abgedichtetes Messkopfgehäuse erzeugt. Im Bereich der Schenkel sind weitere Ausnehmungen in den Deckelrohling eingebracht. Diese Ausnehmungen sind dazu vorgesehen, Befestigungsmittel aufzunehmen.

In den Unteransprüchen sind vorteilhafte Weiterbildungen und Verbesserungen der Erfindung angegeben.

Der Deckelrohling kann aus einem eloxierten Aluminiumblech hergestellt sein. Dabei kann es sich vor dem Eloxieren um ein Walzerzeugnis, ein Stranggußbauteil, oder einen andersartig hergestellten Profilkörper handeln.

In einer besonders vorteilhaften Ausgestaltung der Erfindung sind auf der dem Messkopfgrundkörper zugewandten Seite des Deckelrohlings, also auf einer Innenseite, Ausnehmungen vorgesehen. Diese Ausnehmungen geben Biegekanten/Biegelinien vor und erleichtern das Umformen, also das Biegen. Der Materialabtrag der Ausnehmungen beträgt vorzugsweise zwischen 25% und 75%, insbesondere zwischen 40% und 60%, bezogen auf die gesamte Materialstärke des Bleches.

Die im Bereich der Schenkel eingebrachten Ausnehmungen sind vorzugsweise eloxalfrei.

In einer bevorzugten Ausführungsform der Erfindung bildet das auf den Deckelrohling aufgebrachte Mittel, vorzugsweise der Klebstoff, einen unterbrechungsfreien Ring aus. Dieser ist besonders bevorzugt nächstmöglich zu Randabschnitten, also Längsstirnflächen und Bodenkanten, des Deckelrohlings ausgebildet. Zum Auftrag des Klebstoffs ist der Deckelrohling näherungsweise waagerecht auf einer Biegevorrichtung aufgespannt, beziehungsweise gehalten. Durch die waagerechte Ausrichtung des Deckelrohlings ist ein Abfließen des Mittels von diesem ausgeschlossen.

Es wird besonders bevorzugt, wenn der Messkopfgrundkörper mit einer Oberseite auf den Deckelrohling aufgesetzt wird. Das heißt, dass gemäß der vorher beschriebenen Ausrichtung des Deckelrohlings, eine Unterseite des Messkopfgrundkörpers von der Innenseite des Deckelrohlings abgewandt ist. Der Messkopfgrundkörper wird also über Kopf auf den Deckelrohling aufgesetzt.

Besonders bevorzugt ist es, wenn der Deckel einstückig ausgebildet ist.

Das Verfahren ist besonders effizient, wenn es voll automatisiert ist, so dass kein manueller Eingriff erfolgen muss. Durch den einfachen Aufbau des Messkopfgehäuses und das entsprechend einfache Verfahren ist eine Automatisierung besonders gut umsetzbar.

Das Aluminiumblech, aus dem der Deckelrohling hergestellt ist, ist besonders bevorzugt ein Flachmaterial. Die Materialstärke kann dabei zwischen 1 mm und 4 mm, insbesondere zwischen 1,5 mm und 2,5 mm ausgebildet.

Ein erfindungsgemäßer Deckel für ein Messkopfgehäuse für ein integriertes Messsystem einer Profilschienenführung ist elektrisch mit dem Messkopfgrundkörper kontaktiert. Erfindungsgemäß erfolgt diese elektrische Kontaktierung über Befestigungsmittel.

Die Erfindung wird im Folgenden anhand der beigefügten Zeichnungen näher erläutert. Es zeigen
Figur 1 eine perspektivische Ansicht eines integrierten Messsystems;
Figur 2 ein Aluminiumblech und einen Deckel;
Figur 3 eine perspektivische Ansicht eines Deckels;
Figur 4 einen Deckel auf einer Biegevorrichtung in Seitenansicht;
Figur 5 eine perspektivische Ansicht eines Deckels auf einer Biegevorrichtung;
Figur 6 eine Seitenansicht einer Biegevorrichtung, eines Deckels und eines Messkopfgrundkörpers;
Figur 7 ein Messkopfgehäuse in Seitenansicht; mit einem Deckel, welcher bereits zur U-Form gebogen wurde.

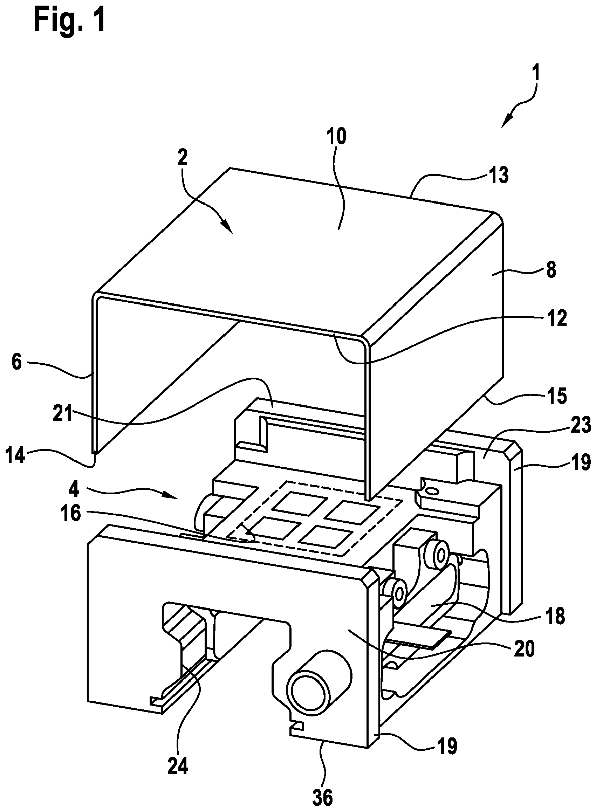

Die perspektivische Ansicht der Fig. 1 zeigt ein Integriertes Messsystem (IMS), das in einem erfindungsgemäßen Messkopfgehäuse 1 untergebracht ist. Da der grundsätzliche Aufbau eines Integrierten Messsystems, bzw. dessen Funktionsweise, aus dem Stand der Technik hinreichend bekannt ist, wird an dieser Stelle nicht detailliert darauf eingegangen. Fig. 1 soll vielmehr den Grundaufbau eines nach dem erfindungsgemäßen Verfahren hergestellten Messkopfgehäuses 1 verdeutlichen. Aufgrund der hier gewählten Explosionsdarstellung ist ein Deckel 2 separat von einem Messkopfgrundkörper 4 gezeigt. Der U-förmige Deckel 2 weist zwei Schenkel 6, 8 auf, die einstückig mit einem Mittelstück 10 des Deckels 2 ausgebildet sind. Die Schenkel 6, 8 erstrecken sich in etwa senkrecht von einer Oberseite des Mittelstücks 10 weg. Die Schenkel 6, 8 haben mit dem Mittelstück 10 zwei gemeinsame Längsstirnflächen 12, 13 wobei eine rückwärtige Längsstirnfläche 13 in Fig. 1 nicht sichtbar gegenüber der anderen Längsstirnfläche 12 ausgebildet ist. Die Schenkel 6, 8 weisen jeweils eine Bodenkante 14, 15 auf, die in der hier dargestellten Fig. 1 nach unten in Richtung des Messkopfgrundkörpers 4 gerichtet sind. Im Messkopfgrundkörper 4 ist eine (hier nur schematisch dargestellte) Auswerteelektronik 16, die mit Sensoren 18 verbunden ist , eingebracht. Der Messkopfgrundkörper 4 ist zur Befestigung an einem Führungswagen eines Linearwälzlagers vorgesehen. Die Sensoren sind beispielsweise gemäße der EP 1965178 B1 ausgebildet. Die Auswerteelektronik 16, sowie die Sensoren 18, sind also in dem Messkopfgehäuse 1 integriert. Daher wird dieses auch als Integriertes Messsystem bezeichnet. In Verfahrrichtung der Abtastvorrichtung wird der Hauptkörper 22 jeweils von einer Stirnplatte 20, 23 begrenzt. Sowohl der Hauptkörper 22 als auch die Stirnplatten 20, 23 weisen eine Innenkontur 24 auf, die ausgebildet ist, auf einer (hier nicht dargestellten) Führungsschiene zu verfahren. Die von der Oberseite des Mittelstücks 10 des Deckels 2 abgewandte, in Figur 1 nach unten weisende Seite des Messkopfgrundkörpers 4 wird im Folgenden als Unterseite 36 bezeichnet. Der U-förmig ausgebildete Deckel 2 umgreift jeweils eine Oberkante 21 und zwei Seitenkanten 19 der Stirnplatten 20, 23 und bildet mit diesen das Messkopfgehäuse 1 aus. Darüber hinaus liegt der Deckel 2 am Hauptkörper 22 an.

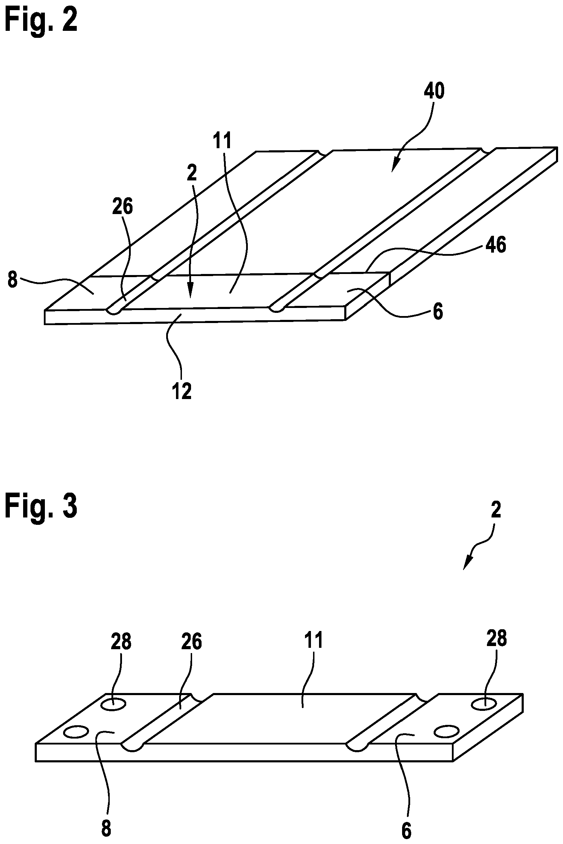

Figur 2 zeigt ein voreloxiertes Aluminiumblech 40, das als Vorprodukt für einen Deckelrohling, aus dem ein Deckel 2 eines Messkopfgehäuses 4 hergestellt wird, dient. Ein hier angedeuteter Schnitt 46 soll verdeutlichen, dass das voreloxierte Aluminiumblech 40 ein Flachmaterial sein kann, das in seinen Abmessungen noch nicht denen eines endgültigen Deckels 2 entspricht. Vielmehr handelt es sich bei dem voreloxierten Aluminiumblech 40 um ein wesentlich größeres Blech, aus dem nach Bedarf die einzelnen Deckelrohlinge 2 abgetrennt werden können. Dieses Abtrennen kann beispielsweise in Form von Stanzen, Sägen, Schneiden oder einem ähnlichen Verfahren erfolgen. Das voreloxierte Aluminiumblech 40 weist Ausnehmungen 26 auf. Diese Ausnehmungen 26 können sowohl vor, als auch nach dem Eloxieren des Aluminiumblechs 40 in dieses eingebracht worden sein. Denkbar wäre, dass das Aluminiumblech 40 als Stranggussteil ausgebildet ist, das die Ausnehmungen 26 bereits integriert hat. Weiter wäre es möglich, dass die Ausnehmungen 26 aus dem Aluminiumblech 40 herausgefräst sind. Die Ausnehmungen 26 bilden eine Biegelinie zwischen den beiden Schenkel 6, 8 und dem Mittelstück 10 des Deckels 2, wobei bei der perspektivischen Darstellung der Figur 2 eine Innenseite 11 des Mittelstücks 10 des Deckels 2 gezeigt ist. Deutlich erkennbar ist, dass die Längsstirnflächen 12, 13 jeweils durch den Schnitt 46 ausgebildet sind.

Figur 3 zeigt einen Deckelrohling 2, wie er im ersten erfindungsgemäßen Verfahrensschritt bereitgestellt wird. Der Deckelrohling 2 ist dabei weitestgehend eben ausgeführt. Das heißt, dass es sich bei dem Deckelrohling 2 um ein Flachmaterial handelt. Dieses weist die bereits zuvor gezeigten Ausnehmungen 26 auf, und ist darüber hinaus mit Bohrungen 28 versehen. Weder die Ausnehmungen 26 noch die Bohrungen 28 ändern etwas an der grundsätzlich planen Ausrichtung des Deckelrohlings 2. Diese plane Ausrichtung, beziehungsweise ebene Ausrichtung, bezieht sich darauf, dass die Schenkel 6, 8 mit dem Mittelstück 10 des Deckelrohlings 2, hier ist wieder die Innenseite 11 sichtbar, in einer Ebene ausgebildet sind. Das heißt, dass zwischen den Schenkeln 6, 8 und dem Mittelteil des Deckels 2 ein Winkel von 0°, beziehungsweise 180° vorliegt.

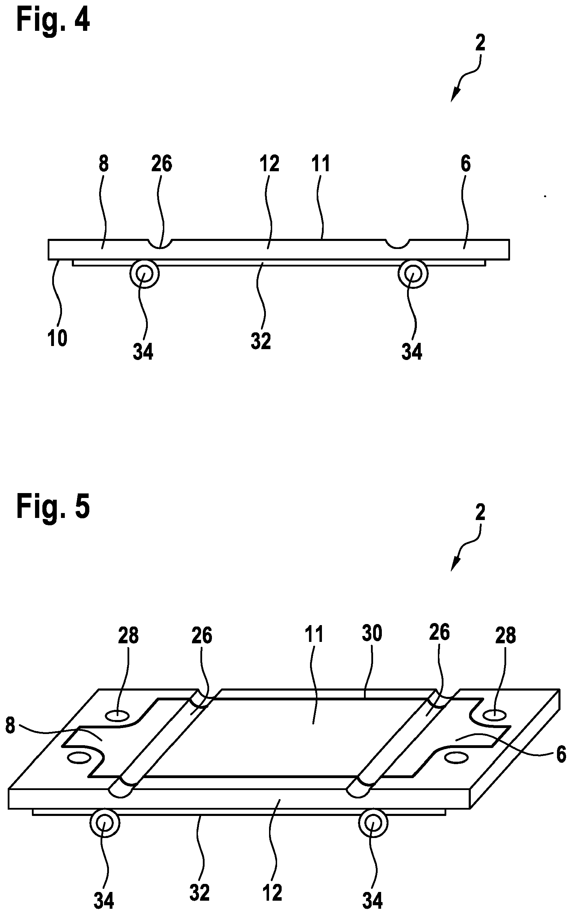

Ein weiterer erfindungsgemäßer Verfahrensschritt ist in der Figur 4 gezeigt. Der Deckelrohling 2 wird auf eine Biegevorrichtung 32 aufgelegt. Die Oberseite 10 des Deckelrohlings 2 liegt dabei plan auf der Biegevorrichtung 32 auf. Die Innenseite 11 des Deckelrohlings 2 liegt auf der der Biegevorrichtung 32 abgewandten Seite des Deckelrohlings 2. Die Biegevorrichtung 32 weist zwei Scharniere 34 auf, die hier rein schematisch dargestellt sind. Die Scharniere 34 befinden sich dabei leicht versetzt zu den Ausnehmungen 26.

In Figur 5 ist der Deckelrohling 2 auf der Biegevorrichtung 32 perspektivisch dargestellt. Ein Klebstoff 30, der in einem weiteren erfindungsgemäßen Verfahrensschritt auf die Innenseite 11 des Deckelrohlings 2 aufgebracht wird, ist hier angedeutet. Wie der Abbildung zu entnehmen, ist der Klebstoff 30 derart ausgebildet, dass er auf dem Deckelrohling 2 einen unterbrechungsfreien Ring darstellt. Dieser unterbrechungsfreie Ring Klebstoff 30 verläuft auf der Innenseite 11 des Deckelrohlings 2 entlang den Längsstirnflächen 12, 13 und den Bodenkanten 14, 15. Die Bohrungen 28 liegen außerhalb des Rings aus Klebstoff 30, sind also von dem Ring aus Klebstoff nicht umgriffen, und werden von diesem auch nicht berührt. Die Ausnehmungen 26 hingegen sind mit Klebstoff 30 gefüllt.

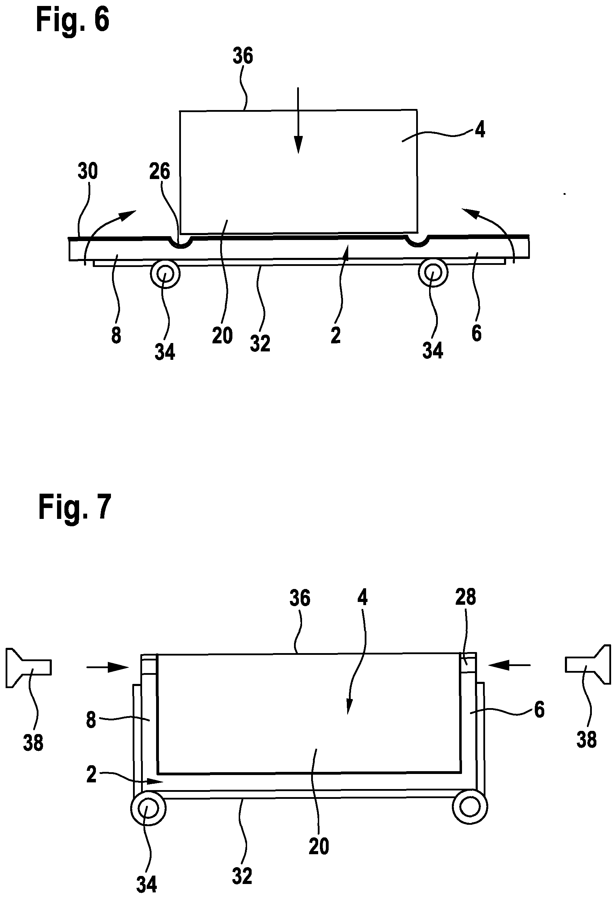

Figur 6 stellt in einer sehr vereinfachten Seitenansicht das Aufsetzen des Messkopfgrundkörpers 4 auf den Deckel 2 dar. Der Messkopfgrundkörper 4 wird dabei kopfüber auf die Innenseite 11 des Deckelrohlings 2 gesetzt. Das heißt, dass die Oberkanten 21 der Stirnplatten 20, 23 auf dem Deckelrohling 2 aufliegen. Der senkrecht nach unten deutende Pfeil im Bereich des Messkopfgrundkörpers 4 zeigt dabei die Aufsetzrichtung an. Beim Aufsetzen des Messkopfgrundkörpers 4 kommt dieser in Kontakt mit dem Klebstoff 30. Mit den zwei äußeren Pfeilen ist ein Umbiegen des Deckelrohlings 2 angedeutet. Die Scharniere 34 der Biegevorrichtung 32 werden die Schenkel 6, 8 entlang der Ausnehmungen 26, die als Sollbiegestellen fungieren, in Richtung des Messkopfgrundkörpers 4 umbiegen.

In Figur 7 ist ein Messkopfgehäuse 1 in Seitenansicht dargestellt, das gemäß dem erfindungsgemäßen Verfahren hergestellt ist. Der Deckel 2 wurde über die Biegevorrichtung 32 in seine Endposition umgebogen und befindet sich nun in seiner endgültigen Form als U-förmiger Deckel 2. Das heißt, dass die Schenkel 6, 8 sich in etwa rechtwinklig von dem Mittelstück 10 des Deckels 2 erstrecken. Dabei sind die Innenseiten der Schenkel 6, 8 über den Klebstoff 30 in Anlage mit dem Messkopfgrundkörper 4 gebracht. Abgesehen von den Stirnplatten 20, 23 und der Unterseite 36 des Messkopfgrundkörpers 4 umschließt der Deckel 2 alle zuvor offenen Seiten des Messkopfgrundkörpers 4. Durch den als umlaufender Ring aufgebrachten Klebstoff 30 umschließt der Deckel 2 den Messkopfgrundkörper 4 fluiddicht. Um einem Auffedern der Schenkel 6, 8 nach dem Öffnen der Biegevorrichtung 32 entgegen zu wirken, werden noch in der Biegevorrichtung 32 Befestigungsmittel 38 durch die Bohrungen 28 des Deckels 2 in den Messkopfgrundkörper 4 eingebracht. Diese Befestigungsmittel 38 können beispielsweise als Senkkopfschrauben ausgeführt sein, die nach außen hin nicht über den Deckel 2 hinausragen, ein Zurückfedern der Schenkel 6, 8 verhindern und gleichzeitig eine elektrische Kontaktierung zwischen dem Messkopfgrundkörper 4 und dem Deckel 2 ausbilden.

Offenbart ist ein Verfahren zur Herstellung eines Messkopfgehäuses für ein Integriertes Messsystem eines Linearlagers einer Profilschienenführung, wobei ein Deckelrohling aus einem Flachmaterial mit einer Klebstoffschicht versehen wird und zu einem Deckel gebogen wird. Ebenfalls offenbart ist ein Deckel für ein Messkopfgehäuse und ein Messkopfgehäuse.

### Bezugszeichenliste

- 1: Messkopfgehäuse
- 2: Deckel
- 4: Messkopfgrundkörper
- 6: Schenkel
- 8: Schenkel
- 10: Mittelstück
- 11: Innenseite
- 12: Längsstirnfläche
- 13: Längsstirnfläche
- 14: Bodenkante
- 15: Bodenkante
- 16: Auswerteelektronik
- 18: Sensor
- 19: Seitenkante
- 20: Stirnplatte
- 21: Oberkante
- 22: Hauptkörper
- 23: Stirnplatte
- 24: Innenkontur Hauptkörper
- 26: Ausnehmung
- 28: Bohrung
- 30: Klebstoff
- 32: Biegevorrichtung
- 34: Scharnier
- 36: Unterseite Messkopfgrundkörper
- 38: Befestigungsmittel
- 40: Voreloxiertes Aluminiumblech
- 46: Schnitt

## Patentansprüche

1. Verfahren zur Herstellung eines Messkopfgehäuses (1) für ein Integriertes Messsystem eines Linearlagers einer Profilschienenführung, umfassend die Schritte:
- Bereitstellen eines weitestgehend planen/ebenen Deckelrohlings (2),
- Auftragen von Mitteln zur stoffschlüssigen Verbindung, vorzugsweise Klebstoff (30) auf eine einem Messkopfgrundkörper (4) zugewandten Innenseite (11) des Deckelrohlings (2),
- Aufsetzen des Messkopfgrundkörpers (4) auf den Deckelrohling (2),
- Umbiegen von Schenkeln (6, 8) des Deckels (2), so dass das Mittel zur stoffschlüssigen Verbindung (30) im Bereich der Schenkel (6, 8) in Anlage mit dem Messkopfgrundkörper (4) kommt,
wobei im Bereich der Schenkel (6, 8) beidseitig Bohrungen (28) zur Aufnahme von Befestigungsmitteln (38) vorgesehen sind, wobei in den Bohrungen (28) Befestigungsmittel aufgenommen sind, so dass der Deckel (2) elektrisch mit dem Messkopfgrundkörper (4) kontaktiert ist.

2. Verfahren nach Patentanspruch 1, **dadurch gekennzeichnet, dass** der Deckel (2) aus einem voreloxierten Aluminiumblech (40) hergestellt ist.

3. Verfahren nach einem der vorhergehenden Patentansprüche, **dadurch gekennzeichnet, dass** auf der dem Messkopfgrundkörper (4) zugewandten Innenseite (11) des Deckels (2) Ausnehmungen (26) vorgesehen sind.

4. Verfahren nach einem der vorhergehenden Patentansprüche, **dadurch gekennzeichnet, dass** das Mittel zur stoffschlüssigen Verbindung (30) eine unterbrechungsfreien Ring bildet, der auf Grund der Ausrichtung auf der Biegevorrichtung (32) nicht von dem Deckel (2) fließen kann.

5. Verfahren nach einem der vorhergehenden Patentansprüche, **dadurch gekennzeichnet, dass** der Messkopfgrundkörper (4) kopfüber auf den Deckelrohling (2) aufgesetzt wird.

6. Verfahren nach einem der vorhergehenden Patentansprüche, **dadurch gekennzeichnet, dass** der Deckel (2) einstückig ausgebildet ist.

7. Verfahren nach einem der vorhergehenden Patentansprüche, **dadurch gekennzeichnet, dass** der Deckel (2) aus einem Flachmaterial mit einer Materialstärke von 1mm bis 4mm, vorzugsweise 1,5mm bis 2,5mm, ausgebildet ist.

## Claims

1. Method for producing a measuring head housing (1) for an integrated measuring system of a linear bearing of a profiled rail guide, comprising the steps:
- providing a substantially planar/flat cover blank (2),
- applying means for materially bonded connection, preferably adhesive (30), to an inner side (11) of the cover blank (2), said inner side facing towards a measuring head base body (4),
- placing the measuring head base body (4) on the cover blank (2),
- bending legs (6, 8) of the cover (2) so that the means for materially bonded connection (30) comes into contact with the measuring head base body (4) in the region of the legs (6, 8),
wherein bores (28) for receiving fastening means (38) are provided on both sides in the region of the legs (6, 8), wherein fastening means are received in the bores (28) so that the cover (2) is electrically contacted with the measuring head base body (4).

2. Method according to Patent Claim 1, **characterized in that** the cover (2) is produced from a pre-anodized aluminium sheet (40).

3. Method according to either of the preceding patent claims, **characterized in that** recesses (26) are provided on the inner side (11) of the cover (2), said inner side facing towards the measuring head base body (4).

4. Method according to one of the preceding patent claims, **characterized in that** the means for materially bonded connection (30) forms an uninterrupted ring which cannot run off the cover (2) owing to the orientation on the bending device (32).

5. Method according to one of the preceding patent claims, **characterized in that** the measuring head base body (4) is placed upside down on the cover blank (2).

6. Method according to one of the preceding patent claims, **characterized in that** the cover (2) is formed in one piece.

7. Method according to one of the preceding patent claims, **characterized in that** the cover (2) is formed from a flat material having a material thickness of 1 mm to 4 mm, preferably 1.5 mm to 2.5 mm.

## Revendications

1. Procédé de fabrication d'un boîtier de tête de mesure (1) pour un système de mesure intégré d'un palier linéaire d'un guidage à rail profilé, comprenant les étapes suivantes :
- la fourniture d'une ébauche de couvercle (2) largement plane/plate,
- l'application de moyens pour la liaison par matière, de préférence d'adhésif (30) sur un côté intérieur (11) de l'ébauche de couvercle (2) tourné vers un corps de base de tête de mesure (4),
- la mise en place du corps de base de tête de mesure (4) sur l'ébauche de couvercle (2),
- le pliage de branches (6, 8) du couvercle (2), de telle sorte que le moyen pour la liaison par matière (30) vient en appui sur le corps de base de tête de mesure (4) dans la zone des branches (6, 8),
des alésages (28) étant prévus des deux côtés dans la zone des branches (6, 8) pour recevoir des moyens de fixation (38), des moyens de fixation étant reçus dans les alésages (28) de telle sorte que le couvercle (2) est en contact électrique avec le corps de base de tête de mesure (4).

2. Procédé selon la revendication 1, **caractérisé en ce que** le couvercle (2) est fabriqué à partir d'une tôle d'aluminium pré-anodisée (40).

3. Procédé selon l'une quelconque des revendications précédentes, **caractérisé en ce que** des évidements (26) sont prévus sur le côté intérieur (11) du couvercle (2) tourné vers le corps de base de tête de mesure (4).

4. Procédé selon l'une quelconque des revendications précédentes, **caractérisé en ce que** le moyen pour la liaison par matière (30) forme une bague sans interruption qui ne peut pas s'échapper du couvercle (2) en raison de l'orientation sur le dispositif de pliage (32).

5. Procédé selon l'une quelconque des revendications précédentes, **caractérisé en ce que** le corps de base de tête de mesure (4) est placé à l'envers sur l'ébauche de couvercle (2).

6. Procédé selon l'une quelconque des revendications précédentes, **caractérisé en ce que** le couvercle (2) est réalisé d'une seule pièce.

7. Procédé selon l'une quelconque des revendications précédentes, **caractérisé en ce que** le couvercle (2) est réalisé en un matériau plat d'une épaisseur de matériau de 1 mm à 4 mm, de préférence de 1,5 mm à 2,5 mm.
